# EUROPEAN PATENT SPECIFICATION

(11) **EP 2 618 015 B1**
(45) Date of publication and mention of the grant of the patent: **27.04.2016**
(21) Application number: 11827767.2
(22) Date of filing: 24.08.2011
(51) Int. Cl.: F16D 13/64, F16F 15/12

(54) **TORSIONAL VIBRATION DAMPING APPARATUS**
TORSIONSSCHWINGUNGS-DÄMPFUNGSVORRICHTUNG
DISPOSITIF AMORTISSEUR DE VIBRATION DE TORSION

(43) Date of publication of application: 24.07.2013
(73) Proprietor: Toyota Jidosha Kabushiki Kaisha, Toyota-shi, Aichi 471-8571 (JP)
(72) Inventor: HIBINO, Takanori, Toyota-shi Aichi 471-8571 (JP)
(74) Representative: Intès, Didier Gérard André
(86) International application number: PCT/JP2011/004692
(87) International publication number: WO 2013/027241

(56) References cited:
- WO-A1-2011/067815
- WO-A1-2011/067815
- JP-A- S57 173 620
- JP-A- 2001 074 102
- US-A- 5 976 048

## Description

### {Technical Field}

The present invention relates to a torsional vibration damping apparatus, and more particularly to a torsional vibration damping apparatus intervening between an internal combustion engine and a power transmission train, and comprising a cam member and a rotation member relatively rotatably connected with each other through an arm member and a resilient member to enable the rotation torque to be transmitted between the cam member and the rotation member.

### {Background Art }

Up until now, there has been proposed an automotive vehicle which comprises a driving source such as an internal combustion engine, an electric motor and the like, and vehicle wheels drivably connected with the driving source through a power transmission train to enable the driving force from the driving source to be transmitted to the vehicle wheels through the power transmission train. The power transmission train with which the driving source is drivably connected is apt to generate a muffled sound and a "jara sound" originated for example from the rotation fluctuation caused by the torque fluctuation of the internal combustion engine.

The term "jara sound" is intended to indicate an abnormal sound generated by the idling gear pairs of transmission gear sets collided by torsional vibrations originated from the rotation fluctuation caused by the torque fluctuation of the internal combustion engine. The term "muffled sound" is intended to indicate an abnormal sound generated in the passenger room by the vibrations caused by the torsional resonance of the power transmission train having the torque fluctuation of the internal combustion engine as a vibratory force. The torsion resonance of the power transmission train exists in the normal drive area of the internal combustion engine.

There has so far been known a torsional vibration damping apparatus which is constructed to have a driving source such as an internal combustion engine, an electric motor and the like drivably connected with vehicle wheels to transmit the driving force from the driving source to the vehicle wheels through a power transmission train having transmission gear sets and to absorb torsional vibrations generated between the driving source and the power transmission train.

As a torsional vibration damping apparatus, there is, for example, an apparatus which comprises a hub member drivably connected with the input shaft of the transmission, a disc plate having a clutch disc to be selectively engaged with or disengaged from a flywheel forming part of the driving source, and resilient members resiliently connecting the hum member and the disc plate and equi-distantly provided in the circumferential direction of the hub member and the disc plate(e.g., see Patent Document 1).

However, the conventional torsional vibration damping apparatus of this kind cannot increase the torsion angle between the hub member and the disc plate, and thus cannot fully attenuate the "jara" sound and the muffled sound due to the construction in which the resilient members are equi-distantly provided in the circumferential direction of the hub member and the disc plate.

Another torsional vibration damping apparatus is known by Patent Document 2 for overcoming the above problem to increase the torsion angle of the mutually relatively rotatable rotation members.

The above known torsional vibration damping apparatus comprises a cam member having an outer peripheral portion formed with a cam surface having a radius of curvature varied in the circumferential direction thereof, a disc plate positioned in coaxial relationship with the cam member to be relatively rotatable with respect to the cam member, and a resilient member provided between the cam member and the disc plate to be deformable in response to the relative rotation of the cam member and the disc plate. The above known torsional vibration damping apparatus further comprises an arm member having one end portion held in friction contact with the cam surface of the cam member and the other end portion urged by the resilient member to have the resilient member resiliently deformable with the arm member being swung around a rotation fulcrum portion provided on the disc plate, so that the resilient member is resiliently deformed in response to the relative rotation of the cam member and the disc plate, thereby transmitting the rotation torque between the cam member and the disc plate.

The above known torsional vibration damping apparatus can enlarge the range of the torsion angle of the cam member and the disc plate by resiliently deforming the resilient member with the swinging motion of the arm member accompanied by the rotation of the cam member.

For this reason, the torsion rigidity of the cam member and the disc plate can be wholly lowered to fully attenuate the "jara" sound and the muffled sound, thereby making it possible to improve the attenuation property of the vibration.

Further, the above known torsional vibration damping apparatus is constructed to have the one end portion of the arm member held in friction contact with the cam surface of the cam member with the urging force of the resilient member, and to have the arm member compressively deform the resilient member with the swinging motion of the arm member accompanied by the rotation of the cam member.

As a result of the construction of the conventional torsional vibration damping apparatus, the contact pressure of the one end portion of the arm member and the cam surface of the cam member is raised, thereby causing the abrasion, the burn-in and other troubles to the contact portion of the one end portion of the arm member and the cam surface of the cam member. For this reason, it is necessary to lubricate the one end portion of the arm member and the cam surface of the cam member. For lubricating the one end portion of the arm member and the cam surface of the cam member, it may be considered to supply a lubricant agent such as grease to the one end portion of the arm member and the cam surface of the cam member.

### {Citation List}

### {Patent Literature}

{PTL1}: Patent Publication No. 2006-144861
{PTL2}:WO2011/067815

### {Summary of Invention}

### {Technical Problem}

The conventional torsional vibration damping apparatus has the cam surface formed on the outer peripheral portion of the cam member to be held in friction contact with the one end portion of the arm member, thereby leading to the fact that the cam member is positioned radially inwardly of the arm member.

For this reason, in the case that the lubricant agent such as grease and the like is supplied to the contact portion of the one end portion of the arm member and the cam surface of the cam member, the centrifugal force generated in the operation of the torsional vibration damping apparatus causes part of the grease to be scattered radially outwardly from the contact portion of the one end portion of the arm member and the cam surface of the cam member, thereby resulting in the grease running out.

As a consequence, there is caused a possibility that the grease cannot continuously lubricate the contact portion of the one end portion of the arm member and the cam surface of the cam member.

The present invention has been made to solve the previously mentioned problems, and has an object to provide a torsional vibration damping apparatus which can continuously lubricate the contact portion of the one end portion of the arm member and the cam surface of the cam member to improve the lubrication property of the contact portion, thereby preventing the abrasion, the burn-in and the like from being caused on the contact portion.

### {Solution to Problem}

To achieve the previously mentioned object, the torsional vibration damping apparatus according to claim 1 is provided.

The torsional vibration damping apparatus according to the present invention is provided with the retaining member on the rotation member to surround the cam member and the arm member to enable the lubricant agent scattered by the centrifugal force generated with the cam member and the rotation member in rotation to be adhered to the radially inner portion of the retaining member, thereby making it possible to accommodate the lubricant agent in the space between the radially inner peripheral portion of the retaining member and the radially outer peripheral portion of the arm member.

The retaining member and the arm member are constructed to maintain the positional relationship of the retaining member and the arm member in such a manner that the distance between the radially outer peripheral portion of the arm member and the radially inner peripheral portion of the retaining member is gradually enlarged from the outer peripheral base point portion near the pivot axis of the arm member toward the base end portion of the guide member in a state where the arm member is pivoted with the one end portion of the arm member being moved in a radial direction from its radially inward position to its radially outward position.

This means that in the state where the arm member is pivoted with the one end portion of the arm member being moved in a radial direction from its radially inward position to its radially outward position in response to the rotation of the cam member, the volume of the space between the radially outer peripheral base point portion near the pivot axis of the arm member and the radially inner peripheral portion of the retaining member can be smaller than the volume of the space between the radially outer peripheral portion of the arm member and the radially inner peripheral portion of the retaining member near the base end portion of the guide plate.

For this reason, the lubricant agent accommodated in the space is pressurized and thus urged toward the guide plate from the space in response to the pivotal movement of the arm member. The guide plate has a forward end portion extending from the base end portion attached to the radially inner peripheral portion of the retaining member toward the contact portion formed by the one end portion of the arm member and the cam surface of the cam member, so that the lubricant agent pushed out of the space can be guided and supplied by the guide plate to the contact portion formed by the one end portion of the arm member and the cam surface of the cam member.

Further, part of the lubricant agent to be supplied by the guide plate to the contact portion formed by the one end portion of the arm member and the cam surface of the cam member can be accommodated again in the space after being scattered by the centrifugal force generated with the cam member and the rotation member in rotation.

The lubricant oil accommodated in the space is again pushed out of the space by the arm member and supplied by the guide plate to the contact portion formed by the one end portion of the arm member and the cam surface of the cam member in a state where the arm member is pivoted to have the one end portion moved from its radially inward position to its radially outward position after the one end portion is moved from its radially outward position to its radially inward position in response to the rotation of the cam member.

In this way, the torsional vibration damping apparatus can repeat the operation to push out the lubricant agent from the space by the arm member to continuously supply the lubricant agent to the contact portion formed by the one end portion of the arm member and the cam surface of the cam member after accommodating in the space by the centrifugal force the lubricant agent supplied to the contact portion formed by the one end portion of the arm member and the cam surface of the cam member.

This results in the fact that the lubrication property of the contact portion formed by the one end portion of the arm member and the cam surface of the cam member can be enhanced, and thus can prevent the abrasion, the burn-in and the like from being caused on the one end portion of the arm member and the cam surface of the cam member.

In the torsional vibration damping apparatus according to the present invention as set forth in the above (1), (2) the radially inner peripheral portion of the arm member preferably has a curved surface shape set with respect to the shape of the radially outer peripheral portion of the retaining member to maintain the positional relationship of the retaining member and the arm member in such a manner that the distance between the radially outer peripheral portion of the arm member and the radially inner peripheral portion of the retaining member is gradually enlarged from the outer peripheral base point portion near the pivot axis of the arm member toward the base end portion of the guide member in a state where the arm member is pivoted with the one end portion of the arm member being moved in a radial direction from its radially inward position to its radially outward position.

In the torsional vibration damping apparatus thus constructed, the volume of the space between the radially outer peripheral portion of the predetermine position of the arm member and the radially inner peripheral portion of the retaining member can be smaller than the volume of the space between the arm member and the retaining member near the base end portion of the guide plate in a state where the arm member is pivoted with the one end portion of the arm member being moved in a radial direction from its radially inward position to its radially outward position in response to the rotation of the cam member.

This results in the fact that the lubricant agent accommodated in the space can be pushed out of the space toward the guide plate in response to the pivotal movement of the arm member to supply the lubricant agent to the contact portion formed by the one end portion of the arm member and the cam surface of the cam member.

In the torsional vibration damping apparatus according to the present invention as set forth in the above (1), (3) the radially inner peripheral portion of the retaining member preferably has a curved surface shape set with respect to the shape of the radially outer peripheral portion of the arm member to maintain the positional relationship of the retaining member and the arm member in such a manner that the distance between the radially outer peripheral portion of the arm member and the radially inner peripheral portion of the retaining member is gradually enlarged from the outer peripheral base point portion near the pivot axis of the arm member toward the base end portion of the guide member in a state where the arm member is pivoted with the one end portion of the arm member being moved in a radial direction from its radially inward position to its radially outward position.

In the torsional vibration damping apparatus thus constructed, the volume of the space between the radially outer peripheral portion of the predetermine position of the arm member and the radially inner peripheral portion of the retaining member can be smaller than the volume of the space between the arm member and the retaining member near the base end portion of the guide plate in a state where the arm member is pivoted with the one end portion of the arm member being moved in a radial direction from its radially inward position to its radially outward position in response to the rotation of the cam member.

For this reason, the lubricant agent accommodated in the space can be pushed out of the space toward the guide plate in response to the pivotal movement of the arm member to supply the lubricant agent to the contact portion formed by the one end portion of the arm member and the cam surface of the cam member.

The vibration damping apparatus as set forth in the above items 1 to 3, (4) preferably further comprises a flexible bag member provided on the radially outer peripheral portion of the arm member.

Due to the fact that the vibration damping apparatus as set forth in the above preferably further comprises a flexible bag member provided on the radially outer peripheral portion of the arm member, the lubricant agent accommodated in the space can reliably be pushed out of the space while the flexible bag being deformed in a state where the arm member is pivoted with the one end portion of the arm member being moved in a radial direction from its radially inward position to its radially outward position in response to the rotation of the cam member. For this reason, the lubricant agent can be supplied to the contact portion formed by the one end portion of the arm member and the cam surface of the cam member.

In the vibration damping apparatus as set forth in the above items (1) to (4), (5) the rotation member preferably includes a pair of disc plates arranged at the both axial sides of the cam member and secured to each other in axially spaced relationship with each other at a predetermined space interval, the disc plates rotatably supporting the arm member through a pivot shaft constituting the pivotal fulcrum portion, and a support member provided on the disc plates to support the resilient member, the axial width of the arm member being set at a width near the predetermined space interval, the retaining member is fastened to the pair of disc plates at a position radially outward of the arm member, the pair of disc plates and the retaining member partly forming together a closed space in which the lubricant agent is accommodated.

The vibration damping apparatus thus constructed has a retaining member attached to the pair of disc plates at a position radially outward of the arm member to accommodate the grease in the closed space surrounded by the pair of disc plates and the retaining member, thereby making it possible for the grease to be prevented from being leaked out of the closed space.

Further, the torsional vibration damping apparatus can repeat the operation to push out the lubricant agent from the space by the arm member to continuously supply the lubricant agent to the contact portion formed by the one end portion of the arm member and the cam surface of the cam member after accommodating in the space by the centrifugal force the lubricant agent supplied to the contact portion formed by the one end portion of the arm member and the cam surface of the cam member.

In addition, the axial width of the arm member is set at a width of the predetermined space interval of the disc plates, viz., set at a width near the predetermined space interval of the disc plates, so that the grease can be prevented from being leaked out of the space, surrounded by the radially inner peripheral portion of the retaining member, the radially outer peripheral portion of the arm member, and the pair of disc plates, through the both end portions of the arm member when the grease is pushed out of the space in response to the rotation of the arm member.

In the vibration damping apparatus as set forth in the above items (1) to (5), (6) the cam member is preferably drivably connected with the input shaft of a transmission of a power transmission train, and the rotation torque of the internal combustion engine is transmitted to the rotation member.

The vibration damping apparatus is constructed to have the rotation member disposed at the axially both sides of the cam member, a pair of disc plates axially spaced at a predetermined interval and secured to each other, the disc plates rotatably supporting the arm member through a rotation shaft constituting a pivotal fulcrum portion, and a support member provided on the disc plates to support the resilient member, the one end portion of the arm member being held in contact with the cam surface of the cam member, so that the range of the torsion angle between the cam member and the rotation member can be widened, thereby making it possible to lower the rigidity of the resilient member.

The input shaft of the transmission of the power transmission train is connected with the cam member, and the rotation torque of the internal combustion engine is transmitted to the rotation member, so that in the area in which the torsion angle between the cam member and the rotation member is small as in the idling state in which the shift position is changed to the neutral position, the resilient member low in rigidity can attenuate extremely small vibrations to suppress rattling sounds from being generated.

In the area in which the torsion angle between the cam member and the rotation member is large, the torsion angle between the cam member and the rotation member is enlarged to ensure that the torsion property of the high rigidity having a large ratio of torque increase is obtained. Therefore, the torsional vibration damping apparatus according to the present embodiment can attenuate the large torsional vibration originated from the rotation fluctuation caused by the torque fluctuation of the internal combustion engine, thereby making it possible to suppress both of the "jara" sound caused by the collisions of the idling gear pairs of the transmission gear sets and the muffled sound caused by the torsional resonance of the power transmission train from being generated.

### {Advantageous Effects of Invention}

According to the present invention, the contact portion of the one end portion of the arm member and the cam surface of cam member can continuously be supplied with the lubricant agent to enhance the lubrication property of the contact portion of the one end portion of the arm member and the cam surface of the cam member, thereby making it possible to prevent the abrasion, the burn-in and the like of the contact portion.

### {Brief Description of Drawings}

FIG. 1 shows a first embodiment of a torsional vibration damping apparatus according to the present invention, and a perspective view of the torsional vibration damping apparatus which is in the state having one of the disc plates disassembled from the torsional vibration damping apparatus.
FIG 2 shows the first embodiment of the torsional vibration damping apparatus according to the present invention, and a perspective view of the torsional vibration damping apparatus.
FIG 3 shows the first embodiment of the torsional vibration damping apparatus according to the present invention, and a front elevational view of the torsional vibration damping apparatus.
FIG 4 shows the first embodiment of the torsional vibration damping apparatus according to the present invention, and a cross-sectional view taken along and seen from the line A-A in FIG 3.
FIG 5 shows the first embodiment of the torsional vibration damping apparatus according to the present invention, and a front elevational view of the torsional vibration damping apparatus which is in the state having the cam member twisted in a positive side at +45 degrees with respect to the disc plates.
FIG 6 shows the first embodiment of the torsional vibration damping apparatus according to the present invention, and the front elevational view of the torsional vibration damping apparatus which is in the state having the cam member twisted in the positive side at +90 degrees with respect to the disc plates.
FIG 7 shows the first embodiment of the torsional vibration damping apparatus according to the present invention, and the front elevational view of the torsional vibration damping apparatus which is in the state having the cam member twisted in a negative side at -45 degrees with respect to the disc plates.
FIG 8 shows the first embodiment of the torsional vibration damping apparatus according to the present invention, and the relationship between the torsion angle and the torque of the torsional vibration damping apparatus.
FIG 9 shows a second embodiment of the torsional vibration damping apparatus according to the present invention, and a front elevational view of the torsional vibration damping apparatus.
FIG 10 shows the second embodiment of the torsional vibration damping apparatus according to the present invention, and the front elevational view of the torsional vibration damping apparatus which is in the state having the cam member twisted in a positive side at +45 degrees with respect to the disc plates.
FIG 11 shows a third embodiment of the torsional vibration damping apparatus according to the present invention, and a front elevational view of the torsional vibration damping apparatus.
FIG 12 shows the third embodiment of the torsional vibration damping apparatus according to the present invention, and the front elevational view of the torsional vibration damping apparatus which is in the state having the cam member twisted in a positive side at +45 degrees with respect to the disc plates.
FIG 13 shows the third embodiment of the torsional vibration damping apparatus according to the present invention, and the front elevational view of the torsional vibration damping apparatus in which the arm member is provided with a bag member.

### {Description of Embodiments}

The embodiments of the torsional vibration damping apparatus according to the present invention will be described hereinafter with reference to the accompanying drawings.

### (First Embodiment)

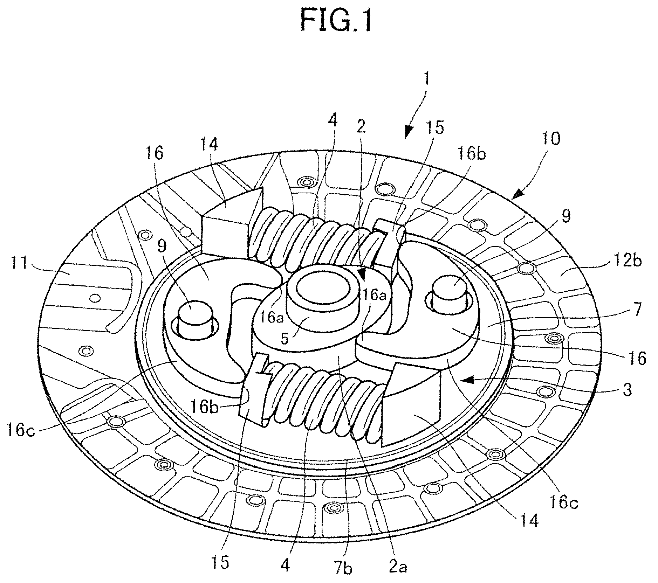

FIGS. 1 to 8 are views showing a first embodiment of the torsional vibration damping apparatus according to the present invention.

Firstly, the construction of this embodiment will be explained hereinafter.

FIGS. 1 to 4 show a torsional vibration damping apparatus 1 which comprises a cam member 2, and a rotation member 3 positioned in coaxial relationship with the cam member 2.

The rotation member 3 is adapted to be inputted with a rotation torque from an internal combustion engine not shown and serving as a driving source, while the cam member 2 is adapted to transmit the rotation torque of the rotation member 3 to a transmission of a power transmission train also not shown.

Between the cam member 2 and the rotation member 3 is provided a pair of coil springs 4 each constituting a resilient member in such a manner that the coil springs 4 can be compressed in response to the cam member 2 and the rotation member 3 relatively rotated.

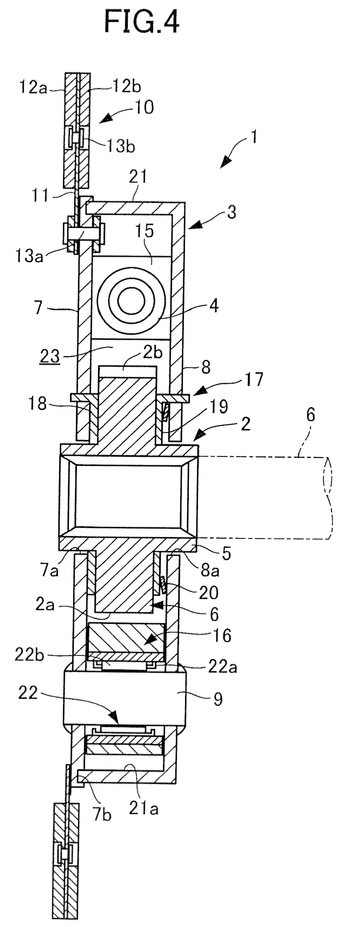

The inner peripheral portion of the cam member 2 is formed with a boss portion 5 splined to the outer peripheral portion of an input shaft 6 (see FIG 4) of the transmission of the power transmission train. The cam member 2 is constituted to include the boss portion 5.

Further, the boss portion 5 and the cam member 2 may be integrally formed with each other. Alternatively, the boss portion 5 and the cam member 2 may be separately formed with each other. In this case, the outer peripheral portion of the boss portion 5 and the inner portion of the cam member 2 are formed with splined portions, respectively, which are held in splined connection with each other.

Further, the rotation member 3 is provided with a pair of disc plates 7, 8 and a clutch disc 10. The disc plates 7, 8 are arranged at the both axial sides of the cam member 2 and in axially spaced relationship with each other, and are connected by pivot shafts 9 each serving as a pivotal fulcrum portion for an arm member hereinafter described.

The pivot shaft 9 is bridged and supported on the disc plates 7, 8 and has axially both end portions respectively formed with large diameter portions which serve to prevent the disc plates 7, 8 from being removed away from the pivot shaft 9 and thus to be engaged with the disc plates 7, 8. For this reason, the disc plates 7, 8 are unitized with the pivot shaft 9 and thus integrally rotatable with the pivot shaft 9. The disc plates 7, 8 are respectively formed with the central through bores 7a, 8a each formed in a cylindrical shape and receiving therein the boss portion 5. The disc plates 7, 8 are provided in coaxial relationship with the boss portion 5.

The clutch disc 10 is disposed radially outwardly of the disc plate 7 and provided with a cushioning plate 11 and friction plates 12a, 12b. This cushioning plate 11 is constructed by a ring-shaped member corrugated in the thickness direction, and secured to the disc plate 7 by a plurality of rivets 13a.

The friction members 12a, 12b are respectively secured to the both surfaces of the cushioning plate 11 by a plurality of rivets 13b, and positioned between a flywheel and a pressure plate both of which are not shown in the drawings, the flywheel being secured to a crankshaft forming part of the internal combustion engine while the pressure plate forming part of a clutch cover bolted to the flywheel.

The friction members 12a, 12b are adapted to be brought into friction engagement with the flywheel and the pressure plate when pressurized by the pressure plate, so that the rotation torque of the internal combustion engine can be inputted to the disc plates 7, 8.

The depression of a clutch pedal not shown causes the friction members 12a, 12b to be released from being pressurized by the pressure plate and moved away from the flywheel, so that the rotation torque of the internal combustion engine cannot be inputted to the disc plates 7, 8.

On the disc plate 7 is provided a base seat 14 serving as a support member to axially project from the disc plate 7 and to be fastened to the disc plate 8.

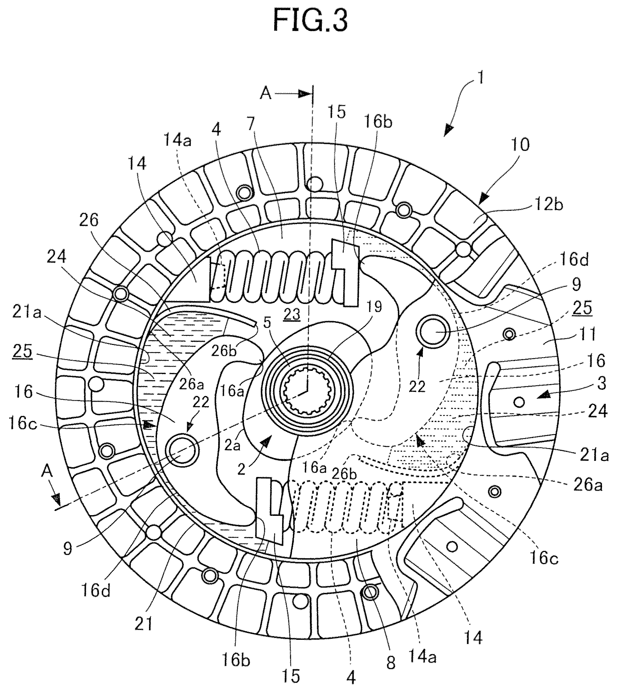

As shown in FIG 3, the base seat 14 has a projection portion 14a projecting from the base seat 14 to be held in engagement with the other end portion of the coil spring 4. The one end portion of the coil spring 4 is attached with a spring seat 15, while the other end portion of the coil spring 4 forms a free end.

Between the coil spring 4 and the cam member 2 is provided an arm member 16 which is positioned between the disc plates 7, 8 and rotatably supported on the pivot shaft 9 through a needle bearing 22.

The axial width of the arm member 16 is set at the space interval between the disc plates 7, 8 arranged at the both axial sides of the cam member 2 and in axially spaced relationship with each other, viz., at a width near the above space interval between the disc plates 7, 8.

As shown in FIG 4, the needle bearing 22 is constructed to include an outer race member 22a secured to the arm member 16, and a plurality of needle rollers 22b disposed between the outer race member 22a and the pivot shaft 9, so that the outer race member 22a is rotatable with respect to the rotation shaft 9 through the needle rollers 22b.

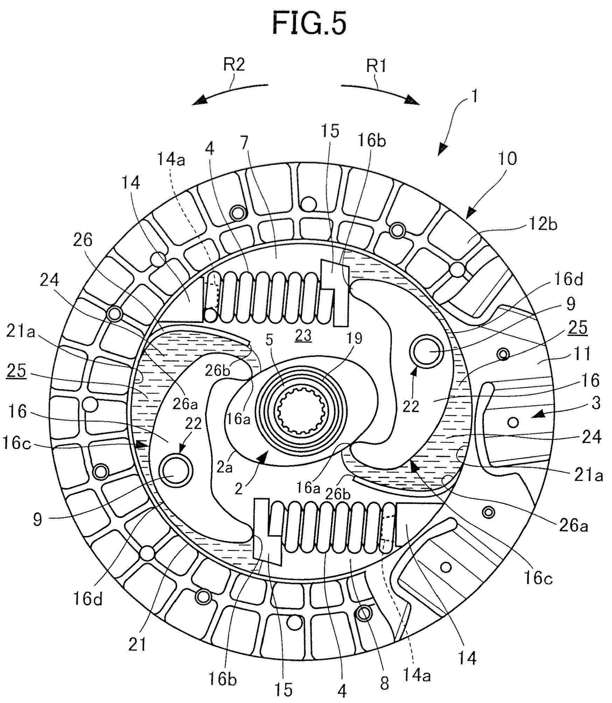

The arm member 16 has one end portion 16a held in contact with the cam surface 2a of the cam member 2, and the other end portion 16b held in engagement with the coil spring 4 through the spring seat 15, so that the arm member 16 is resiliently urged by the coil spring 4 in a clockwise direction in FIGS. 3 and 5.

The cam member 2 forming part of the present embodiment has an outer peripheral portion formed with the cam surface 2a in the form of an ellipse shape. The cam surface 2a has a radius of curvature increased in response to the torsion angle increased between the disc plates 7, 8 and the cam member 2 from the initial position of the cam member 2, viz., the neutral positions of the disc plates 7, 8 and the cam member 2 in which the torsion angle between the disc plates 7, 8 and the cam member 2 is at a minimum value ("0" degree of the torsion angle)

This means that the cam member 2 of the present embodiment has an initial position set to have the one end portion 16a of the arm member 16 held in contact with the cam surface 2a having a small radius of curvature when the torsion angle between the disc plates 7, 8 and the cam member 2 is at a minimum value.

For this reason, the fact that the position of the cam surface 2a held in contact with the one end portion 16a of the arm member 16 is variable in response to the rotation of the cam member 2 leads to the fact that the compression amount of the coil spring 4 is variable in response to the movement of the spring seat 15 urged by the arm member 16. The spring seat 15 is thus movable toward and away from the base seat 14.

An additional arm member 16 is disposed in symmetrical relationship with the arm member 16 across the center axes of the disc plates 7, 8, and the both arm members 16 respectively have one end portions 16a held in contact with the cam surfaces 2a of the cam member 2. The cam surfaces 2a respectively have radiuses of curvature identical to each other and extending across the center axes of the disc plates 7, 8.

On the other hand, as shown in FIG 4, between the disc plates 7, 8 and the cam member 2 is provided a hysteresis mechanism 17 which is constituted by a pair of friction members 18, 19 and a disc spring 20 each of which is formed in an annular shape.

The friction member 18 is formed by an annular member having a surface with a predetermined frictional coefficient, and attached to the disc plate 7 to be disposed between the disc plate 7 and the cam member 2.

The friction member 19 is also formed by an annular member having a surface with a predetermined frictional coefficient, and attached to the disc plate 8 to be disposed between the disc plate 8 and the cam member 2.

The disc spring 20 is formed in a truncated cone-shape, and disposed between the friction member 19 and the disc plate 8. The disc spring 20 functions to generate an axially resilient force in the state of having the disc plates 7, 8 held in friction contact with the cam member 2 through the friction members 18, 19, thereby generating a hysteresis torque between the cam member 2 and the disc plates 7, 8.

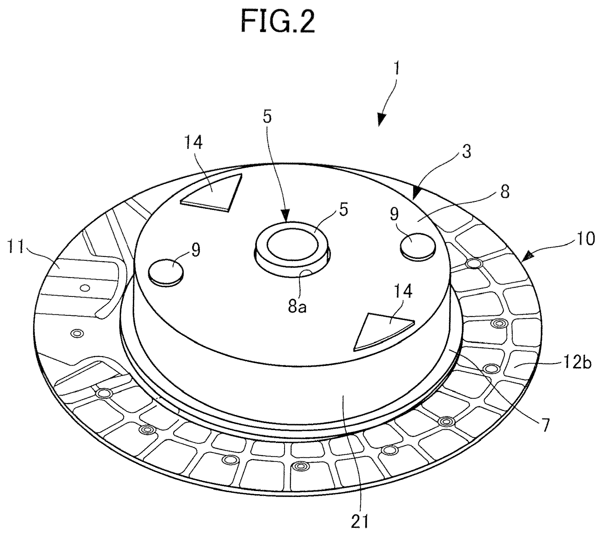

On the other hand, as shown in FIGS. 2 to 4, the disc plate 8 has a radially outer end at which an annular member 21 constituting a retaining member is formed, the annular member 21 being formed in an annular shape extending in the circumferential direction of the disc plate 8.

As shown in FIG 4, the annular member 21 has a forward end held in engagement with an annular groove 7b formed on the disc plate 7, and a radially inner peripheral portion (hereinafter simply referred to as "inner peripheral portion") 21a in opposing relationship with the cam surface 2a of the cam member 2. Here, the annular groove 7b may have an O-shaped ring received therein to prevent grease described hereinafter from leaked from between the forward end of the annular member 21 and the annular groove 7b.

The annular member 21 is thus positioned at a position radially outward of the disc plates 7, 8 to surround the cam member 2 and the arm member 16. The torsional vibration damping apparatus 1 further has a closed space 23 formed by the disc plates 7, 8 and the annular member 21 to accommodate the cam member 2, the coil springs 4 and the arm members 16 therein.

As shown in FIG 3, the closed space 23 accommodates therein a predetermined amount of grease 24 serving as a lubricant agent which is to be adhered to the inner peripheral portion 21a of the annular member 21 when the grease 24 is scattered in response to the rotations of the cam member 2 and the disc plates 7, 8, viz., by the centrifugal force generated upon the operation of the torsional vibration damping apparatus 1.

Further, FIG 3 shows part of the grease 24 adhered to the inner peripheral portion 21a of the annular member 21, however, the grease 24 is adhered to the entire part of the inner peripheral portion 21 a of the annular member 21. The accommodation amount of the grease 24, i.e., the volume of the grease 24 is set at for example 1/2 of the volume of the closed space 23.

If the volume of the grease 24 is equal to the volume of the closed space 23, the lubrication property of the contact portion formed by the one end portions 16a of the arm members 16 and the cam surface 2a of the cam member 2 are certain to be ensured, however, the above volume of the grease 24 is not preferable since the extremely large volume of the grease 24 causes a large sliding resistance to the movements of the arm members 16 and the cam member 2. The volume of the grease 24 is not limited to 1/2 of the volume of the closed space 23, and is preferably of a degree not to badly affect the sliding resistance to the movements of the arm members 16 and the cam member 2.

The part of the grease 24 scattered to be adhered to the inner peripheral portion 21a of the annular member 21 by the centrifugal force generated upon the operation of the torsional vibration damping apparatus 1 is adapted to be accommodated in the space 25 surrounded by the inner peripheral portion 21a of the annular member 21, the radially outer peripheral portions (hereinafter simply referred to as "outer peripheral portions") 16c of the arm members 16, and the disc plates 7, 8.

On the inner peripheral portion 21a of the annular member 21 are provided a pair of guide plates 26 each of which is in a plate-like shape and constitutes a guide member. Each of the guide plates 26 includes a base end portion 26a attached to the inner peripheral portion 21a of the annular member 21, and a forward end portion 26b extending from the base end portion 26a toward the contact portion formed by the one end portion 16a of the arm member 16 and the cam surface 2a of the cam member 2. The guide plate 26 has a function to guide the grease 24 accommodated in the space 25 hereinafter described in detail to the contact portion formed by the one end portion 16a of the arm member 16 and the cam surface 2a of the cam member 2.

The outer peripheral portion 16c of the arm member 16 has a curved surface shape formed with the positional relationship between the arm member 16 and the annular member 21 being maintained in such a manner that the distance between the outer peripheral portion 16c of the arm member 16 and the inner peripheral portion 21a of the annular member 21 is gradually enlarged from the predetermined position at the other end portion 16b of the arm member 16 toward the base end portion 26a of the guide member 26 when the arm member 16 is pivoted to allow the one end portion 16a of the arm member 16 to be moved in a radial direction from its radially inward position to its radially outward position.

More specifically, as shown in FIGS. 5 to 7, the arm member 16 has a curved surface shape formed from the predetermined position of the arm member 16 to the base end portion 26a of the guide plate 26 with respect to the shape of the inner peripheral portion 21a of the annular member 21, with the positional relationship between the arm member 16 and the annular member 21 being maintained in such a manner that the distance between the outer peripheral portion 16c of the arm member 16 and the inner peripheral portion 21a of the annular member 21 is gradually enlarged from the predetermined position at the other end portion 16b of the arm member 16 toward the base end portion 26a of the guide member 26 in the state where the cam member 2 is rotated and the arm member 16 is thus pivoted to allow the one end portion 16a of the arm member 16 to be moved in a radial direction from its radially inward position to its radially outward position.

The annular member 21 of the present embodiment has the inner peripheral portion 21a formed in an annular shape. For this reason, the radius of curvature of the outer peripheral portion 16c of the arm member 16 with respect to the radius of curvature of the inner peripheral portion 21a of the annular member 21 is gradually enlarged from the predetermined position at the other end portion 16b of the outer peripheral portion 16c of the arm member 16 toward the one end portion 16a of the arm member 16, thereby making it possible to maintain the positional relationship with the distance between the arm member 16 and the annular member 21 as previously defined.

Here, the predetermined position at the other end portion 16b of the arm member 16 is intended to indicate the radially outer peripheral portion of the arm member 16 positioned at the other end portion 16b of the arm member 16 with respect to the pivot shaft 9, the predetermined position being hereinafter referred to as "the outer peripheral base point portion 16d".

The operation of the torsional vibration damping apparatus according to the present invention will then be described hereinafter.

FIGS. 5 to 7 show the states in which the disc plates 7, 8 are subjected to the rotation torque of the internal combustion engine to be rotated from the state shown in FIG 3 to the state that the disc plates 7, 8 are rotated in the clockwise direction (R1). For the sake of convenience, the following explanation will be made hereinafter about the fact that the cam member 2 is to be twisted in the positive anti-clockwise direction (R2 direction) and in the negative clockwise direction (R1 direction) with respect to the disc plates 7, 8.

The state in which the disc plate 8 is removed from the torsional vibration damping apparatus is shown in FIGS. 5 to 7. The state in which the cam member 2 is twisted in the positive anti-clockwise direction (R2 direction) with respect to the disc plates 7, 8 appears at the acceleration time of the vehicle.

The friction members 12a, 12b pressurized by the pressure plate to be brought into friction engagement with the flywheel and the pressure plate cause the rotation torque of the internal combustion engine to be inputted to the disc plates 7, 8.

The torsional vibration damping apparatus 1 according to the present embodiment is operative to take the state in which the relative rotations of the disc plates 7, 8 and the cam member 2 is small, viz., the torsion angle of the disc plates 7, 8 and the cam member 2 is small near zero degree. In this state of the torsional vibration damping apparatus 1, the cam member 2 is positioned at its initial position as shown in FIG 3, so that the disc plates 7, 8 are integrally rotated with the cam member 2.

At this time, the one end portion 16a of the arm member 16 is held in contact with the cam surface 2a of the cam member 2 having a small radius of curvature, so that the cam member 2 pressurizes the arm member 16 to the spring seat 15, thereby resulting in the coil spring 4 being urged by the cam member 2.

At this time, the reaction force of the coil spring 4 causes the arm member 16 to be pivoted around the pivot shaft 9, thereby pressurizing the cam member 2 in the principle of the lever. For this reason, the rotation torque of the disc plates 7, 8 is transmitted to the cam member 2 through the coil spring 4 and the arm member 16. The rotation torque of the internal combustion engine is therefore transmitted to the input shaft 6 of the transmission, whereupon the compression amount of the coil spring 4 is small.

As a consequence, the torsional vibration of the disc plates 7, 8 and the cam member 2 is absorbed and thus attenuated while the driving force of the internal combustion is being transmitted from the disc plates 7, 8 to the cam member 2.

On other hand, in the case that the rotation fluctuation caused by the torque fluctuation of the internal combustion engine at the acceleration time of the vehicle is small, the fluctuation torque between the disc plates 7, 8 and the cam member 2 is small, so that the cam member 2 is relatively rotated with respect to the disc plates 7, 8 in the clockwise direction (R1).

At this time, when the cam member 2 is rotated in the R1 direction as the torsion angle of the disc plates 7, 8 and the cam member 2 is increased as will be seen from the state shown in FIG 3 to the state shown in FIG 5, the one end portion 16a of the arm member 16 slides on and along the cam surface 2a of the cam member 2.

Due to the fact that the radius of curvature of the cam surface 2a of the cam member 2 is increased in response to the torsion angle increased between the disc plates 7, 8 and the cam member 2 from the initial position of the cam member 2, when the one end portion 16a of the arm member 16 is pressurized on the cam surface 2a of the cam member 2 gradually increased in radius of curvature, the other end portion 16b of the arm member 16 is moved radially inwardly and circumferentially.

The other end portion 16b of the arm member 16 moving radially inwardly of the disc plates 7, 8 as the cam member 2 is rotated in the R 1 direction causes the spring seat 15 to move toward the base seat 14.

Further, the other end portion 16b of the arm member 16 moving along the circumferentially outer peripheral portion of the spring seat 15 causes the spring seat 15 to circumferentially freely be movable. FIG 5 shows the state in which the torsion angle between the disc plates 7, 8 and the cam member 2 is +45 degrees.

In this way, the arm member 16 urging the coil spring 4 causes the coil spring 4 compressed to generate a reaction force which in turn rotates the arm member 16 around the pivot shaft 9, so that the cam member 2 is pressurized by the relatively strong pressure force of the arm member 16 under the principle of the lever.

Therefore, the torsion vibration of the disc plates 7, 8 and the cam member 2 can be absorbed and attenuated while the driving force of the internal combustion engine is being transmitted through the disc plates 7, 8 to the cam member 2.

When the rotation fluctuation caused by the torque fluctuation of the internal combustion engine is further increased, the fluctuation torque to be transmitted from the disc plates 7, 8 to the cam member 2 comes to be increased to have the cam member 2 further relatively rotated with respect to the disc plates 7, 8 in the clockwise direction (R 1 direction).

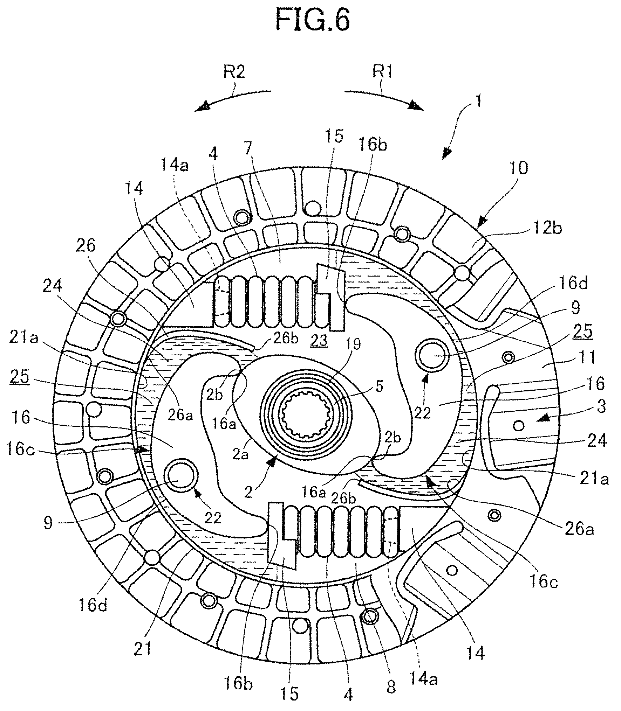

When the torsion angle between the disc plates 7, 8 and the cam member 2 becomes a maximum angle of +90 degrees for example as shown in FIG 6 from the state shown in FIG 5, the one end portion 16a of the arm member 16 is positioned at the apex portion 2b of the cam surface 2a having a maximum radius of curvature, so that the cam member 2 comes to urge the coil spring 4 through the arm member 16 at a larger urging force.

As a result, the reaction force of the coil spring 4 comes to be increased to a further increased level, the torsion vibration of the disc plates 7, 8 and the cam member 2 can be absorbed and attenuated while the driving force of the internal combustion is being transmitted from the disc plates 7, 8 to the cam member 2.

In this case, due to the fact that the radius of curvature of the cam surface 2a of the cam member 2 is further increased in response to the torsion angle increased between the disc plates 7, 8 and the cam member 2 from the initial position of the cam member 2, when the one end portion 16a of the arm member 16 is pressurized on the cam surface 2a of the cam member 2 gradually increased in radius of curvature, the other end portion 16b of the arm member 16 is moved radially inwardly.

Also in this case, the other end portion 16b of the arm member 16 moving along the circumferentially outer peripheral portion of the spring seat 15 causes the spring seat 15 to circumferentially freely be movable.

When the disc plates 7, 8 are inputted with an excessively large torque from the internal combustion engine, the one end portion 16a of the arm member 16 moves over the apex portion 2b of the cam surface 2a with the maximum radius of curvature to allow the disc plates 7, 8 to be rotated idly with respect to the cam member 2, so that the cam member 2 can be functioned as a torque limiter at the acceleration time of the vehicle.

As a consequence, the excessively large torque from the disc plates 7, 8 can be prevented from being transmitted to the cam member 2, thereby making it possible to protect the transmission gear set of the transmission.

Further, the hysteresis mechanism 17 intervening between the disc plates 7, 8 and the cam member 2 can generate a predetermined hysteresis torque when the disc plates 7, 8 and the cam member 2 are being relatively rotated with each other.

On the other hand, at the deceleration time of the vehicle when the drive torque of the internal combustion engine comes to be reduced, thereby generating an engine brake, the rotation torque from the input shaft 6 of the transmission is inputted to the cam member 2. When the rotation fluctuation caused by the torque fluctuation of the internal fluctuation at the deceleration of the vehicle is at a small level, the fluctuation torque between the cam member 2 and the disc plates 7, 8 is at a small level, so that the cam member 2 is twisted in a negative side (R2 direction) relatively with respect to the disc plates 7, 8.

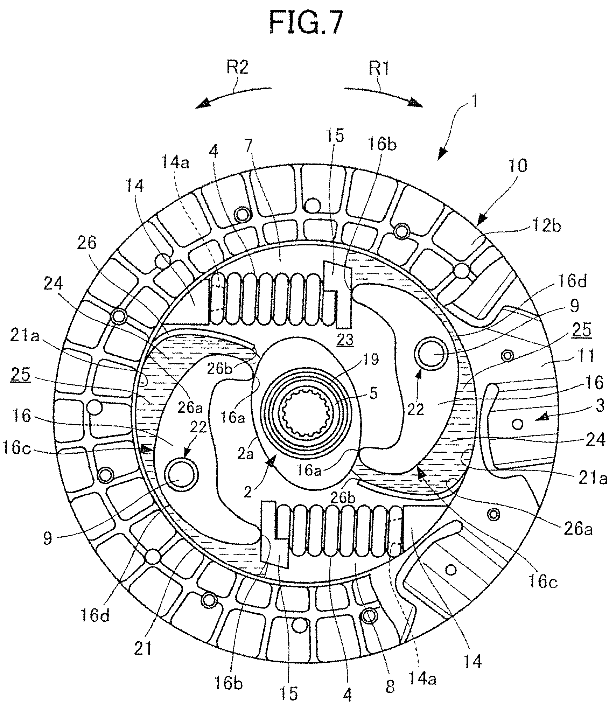

At this time, the disc plates 7, 8 and the cam member 2 are relatively rotated with each other as shown in FIG 7 from the state shown in FIG. 3. As the torsion angle between the disc plates 7, 8 and the cam member 2 comes to be increased, the cam member 2 is rotated and thus one end portion 16a of the arm member 16 slides on and along the cam surface 2a of the cam member 2.

Due to the fact that the radius of curvature of the cam surface 2a of the cam member 2 is increased in response to the torsion angle increased between the disc plates 7, 8 and the cam member 2 from the initial position of the cam member 2, when the one end portion 16a of the arm member 16 is pressurized on the cam surface 2a of the cam member 2 gradually increased in radius of curvature, the other end portion 16b of the arm member 16 is moved radially inwardly and circumferentially.

The other end portion 16b of the arm member 16 moving radially inwardly of the disc plates 7, 8 as the cam member 2 is rotated in the anti-clockwise direction (R2 direction) causes the spring seat 15 to move toward the base seat 14.

Further, the other end portion 16b of the arm member 16 moving along the circumferentially outer peripheral portion of the spring seat 15 causes the spring seat 15 to circumferentially freely be movable. FIG. 7 shows the state in which the torsion angle between the disc plates 7, 8 and the cam member 2 is +45 degrees.

In this way, the arm member 16 urging the coil spring 4 causes the coil spring 4 compressed to generate a reaction force which in turn rotates the arm member 16 around the pivot shaft 9, so that the cam member 2 is pressurized by the relatively strong pressure force of the arm member 16 under the principle of the lever.

Therefore, the torsion vibration of the disc plates 7, 8 and the cam member 2 can be absorbed and attenuated while the driving force of the power transmission train is being transmitted to the disc plates 7, 8 from the cam member 2.

When the disc plates 7, 8 are inputted with an excessively large torque from the internal combustion engine, the one end portion 16a of the arm member 16 moves over the apex portion 2b of the cam surface 2a with the maximum radius of curvature to allow the disc plates 7, 8 to be rotated idly with respect to the cam member 2, so that the cam member 2 can be functioned as a torque limiter.

As a consequence, the excessively large torque from the disc plates 7, 8 can be prevented from being transmitted to the cam member 2 from the disc plates 7, 8 at the deceleration time of the vehicle, thereby making it possible to protect the transmission gear set of the transmission.

Further, at the deceleration time of the vehicle similar to the acceleration time of the vehicle, the hysteresis mechanism 17 can generate a predetermined hysteresis torque when the disc plates 7, 8 and the cam member 2 are being relatively rotated with each other.

As will be understood from the foregoing description, the torsional vibration damping apparatus 1 according to the present embodiment comprises a pair of disc plates 7, 8 arranged at the both axial sides of the cam member 2 and secured to each other in axially spaced relationship with each other to pivotably support the arm member 16 through the pivot shaft 9, and a base seat 14 for supporting the other end portion of the coil spring 4, the one end portion 16a of the arm member 16 being held in contact with the cam surface 2a of the cam member 2, so that the range of the torsion angle between the cam member 2 and the disc plates 7, 8 can be enlarged, thereby making it possible to bring about a low rigidity to the coil spring 4.

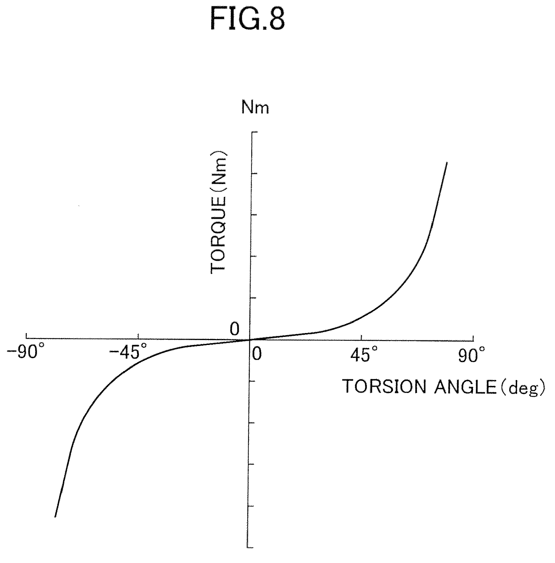

FIG 8 is a view showing a torsion property of the disc plates 7, 8 and the cam member 2, and is a graph for explaining the relationship between the torsion angle of the disc plates 7, 8 and the cam member 2 and the output torque to be outputted from the cam member 2. The relative torsion angle of the cam member 2 with respect to the disc plates 7, 8 is shown by a horizontal axis, while the output torque outputted from the cam member 2 is shown by a vertical axis.

In the present embodiment as shown in FIG 8, the coil spring 4 compressed in response to the increased torsion angle of the cam member 2 with respect to the disc plates 7, 8 causes the pressure force to the cam member 2 by the arm member 16 to be increased.

The pressure force increased to the cam member 2 by the arm member 16 causes the output torque to be increased. The output torque fluctuated at this time comes to have a torsion property formed in a curved shape continuously varied. The torsional vibration damping apparatus 1 according to the present embodiment can enlarge the torsion angle by 90 degrees to the positive side and the negative side, respectively.

The torsion property and the magnitude of the torsion angle at the time of the relative rotation of the disc plates 7, 8 and the cam member 2 can be set to a desired torsion property and a desired torsion angle (for example a total of 180 degrees at the positive and negative sides), respectively, by adjusting the shape of the cam surface 2a of the cam member 2, the spring constant of the coil spring 4, and the shape of the arm member 16.

For this reason, in the small area of the torsion angle between the cam member 2 and the disc plates 7, 8 as seen in the idling state of the internal combustion engine having a shift position changed to a neutral shift position, the coil spring 4 with the low rigidity causes the small vibration to be attenuated, thereby making it possible to suppress "jara" sound from being generated.

Further, in the large area of the torsion angle between the cam member 2 and the disc plates 7, 8, the torsion property with the high rigidity in which the torsion angle of the cam member 2 and the disc plates 7, 8 becomes large, and the torque rising ratio becomes large.

Therefore, the torsional vibration damping apparatus according to the present embodiment can attenuate the large torsional vibration originated from the rotation fluctuation caused by the torque fluctuation of the internal combustion engine and the torsional resonance of the power transmission train, thereby making it possible to suppress both of the "jara" sound caused by the collisions of the idling gear pairs of the transmission gear sets and the muffled sound caused by the torsional resonance of the power transmission train from being generated.

On the other hand, the grease 24 is accommodated in the closed space 23 formed by the disc plates 7, 8 and the annular member 21 to house the cam member 2, the coil spring 4 and the arm member 16 therein.

The torsional vibration damping apparatus 1 according to the present embodiment has an annular member 21 having a radially inner peripheral portion 21 a opposing to the cam surface 2a of the cam member 2 and fastened to the disc plate 7 to surround the cam member 2 and the arm member 16, the annular member 21 allowing the grease 24 to be adhered to the radially inner peripheral portion 21a and to accommodate part of the grease 24 in a space 25 formed between the radially inner peripheral portion 21a and the radially outer peripheral portion 16c of the arm member 16 when the grease 24 is scattered radially outwardly by the centrifugal force generated upon the operation of the torsional vibration damping apparatus 1.

The torsional vibration damping apparatus 1 according to the present embodiment is constructed as shown in FIGS. 5 to 7 to have the radially outer peripheral portion 16c of the arm member 16 having a curved surface shape set with respect to the shape of the radially inner peripheral portion 21a of the annular member 21 to maintain the positional relationship of the annular member 21 and the arm member 16 in such a manner that the distance between the radially outer peripheral portion 16c of the arm member 16 and the radially inner peripheral portion 21a of the annular member 21 is gradually enlarged from the outer peripheral base point portion 16d of the arm member 16 toward the base end portion 26a of the guide member 26 in the state where the arm member 16 is pivoted with the one end portion 16a of the arm member 16 being moved in a radial direction from its radially inward position to its radially outward position.

For this reason, in a state where the arm member 16 is pivoted with the one end portion 16a of the arm member 16 being moved in a radial direction from its radially inward position to its radially outward position in response to the rotation of the cam member 2, the volume of the space between the outer peripheral base point portion 16d of the arm member 16 and the radially inner peripheral portion 21a of the annular member 21 can be smaller than the volume of the space between the radially outer peripheral portion 16c of the arm member 16 close to the base end portion 26a of the guide member 26 and the radially inner peripheral portion 21a of the annular member 21.

This means that the grease 24 accommodated in the space 25 is pressurized and thus urged toward the guide plate 26 from the space 25 in response to the pivotal movement of the arm member 16.

The torsional vibration damping apparatus 1 according to the present embodiment is constructed to have a guide plate 26 having a base end portion 26a attached to the radially inner peripheral portion 21a of the annular member 21 in such a manner that the base end portion 26a is positioned near the one end portion 16a of the arm member 16 with respect to the pivot shaft 9, and a forward end portion 26b extending from the base end portion 26a toward a contact portion formed by the one end portion 16a of the arm member 16 and the cam surface 2a of the cam member 2 to guide the grease 24 accommodated in the space 25 to the contact portion formed by the one end portion 16a of the arm member 16 and the cam surface 2a of the cam member 2.

The torsional vibration damping apparatus 1 thus constructed can push out the grease 24 from the space 25 to have the guide plate 26 cause the grease to be supplied to the contact portion formed by the one end portion 16a of the arm member 16 and the cam surface 2a of the cam member 2.

Further, the torsional vibration damping apparatus 1 according to the present embodiment thus constructed is formed with a gap between the outer peripheral base point portion 16d of the arm member 16 and the annular member 21, so that there is a possibility that the grease 24 leaks out of the gap toward the other end portion 16b of the arm member 16.

The gap between the outer peripheral base portion 16d of the arm member 16 and the annular member 21 is small, while the volume of the space between the outer peripheral portion 16c of the arm member 16 close to the base end portion 26a of the guide plate 26 and the inner peripheral portion 21a of the annular member 21 is larger than the volume of the space between the outer peripheral base point portion 16d of the arm member 16 and the inner peripheral portion 21a of the annular member 21.

For this reason, the torsional vibration damping apparatus 1 according to the present embodiment thus constructed can make the pressure of the space between the arm member 16 close to the base end portion 26a of the guide plate 26 and the annular member 21 smaller than the pressure of the space between the outer peripheral base point portion 16d of the arm member 16 and the annular member 21.

This means that the grease 24 in the space 25 can be pushed out toward the gap between the arm member 16 close to the base end portion 26a of the guide plate 26 and the annular member 21 while reducing an amount of grease to be leaked out of the gap between the outer peripheral base point portion 16d of the arm member 16 and the annular member 21.

The grease 24 supplied by the guide plate 26 to the contact portion formed by the one end portion 16a of the arm member 16 and the cam surface 2a of the cam member 2 is scattered by the centrifugal force generated in the operation of the torsional vibration damping apparatus 1, so that part of the grease 24 is accommodated again in the space 25.

The grease 24 accommodated again in the space 25 is again pushed out by the arm member 16 and supplied by the guide plate 26 to the contact portion formed by the one end portion 16a of the arm member 16 and the cam surface 2a of the cam member 2 in a state where the arm member 16 is pivoted to have the one end portion 16a of the arm member 16 move from its radially outward position to the radially inward position after the one end portion 16a of the arm member 16 is moved from the radially outward position to the radially inward position.

In this way, the torsional vibration damping apparatus 1 according to the present embodiment thus constructed can continuously supply the grease 24 to the contact portion formed by the one end portion 16a of the arm member 16 and the cam surface 2a of the cam member 2 by repeating the action to push out the grease 24 from the space 25 by the arm member 16 after the grease 24 is accommodated in the space 25 by the centrifugal force previously mentioned.

As a consequence, the torsional vibration damping apparatus 1 according to the present embodiment thus constructed can improve the lubrication property of the one end portion 16a of the arm member 16 and the cam surface 2a of the cam member 2, thereby preventing the abrasion, the burn-in and the like from being caused on the contact portion of the one end portion 16a of the arm member 16 and the cam surface 2a of the cam member 2.

Further, the torsional vibration damping apparatus 1 according to the present embodiment thus constructed comprises an annular member 21 positioned radially outwardly of the arm member 16 and attached to the disc plates 7, 8 to enable the grease 24 to be accommodated in the closed space 23 surrounded by the disc plates 7, 8 and the annular member 21, thereby making it possible to prevent the grease 24 from leaking out of the space 23.

In addition, the axial width of the arm member 16 is set at a width near the space interval equivalent to the predetermined distance between the disc plates 7, 8, so that the grease 24 can be prevented from leaking out of the both axial end portions of the arm members 16 in a state where the arm member 16 is pivoted to have the grease 24 pushed out from the space 25 formed by the inner peripheral portion 21a of the annular member 21, the outer peripheral portion 16c of the arm member 16 and the disc plates 7, 8.

### (Second Embodiment)

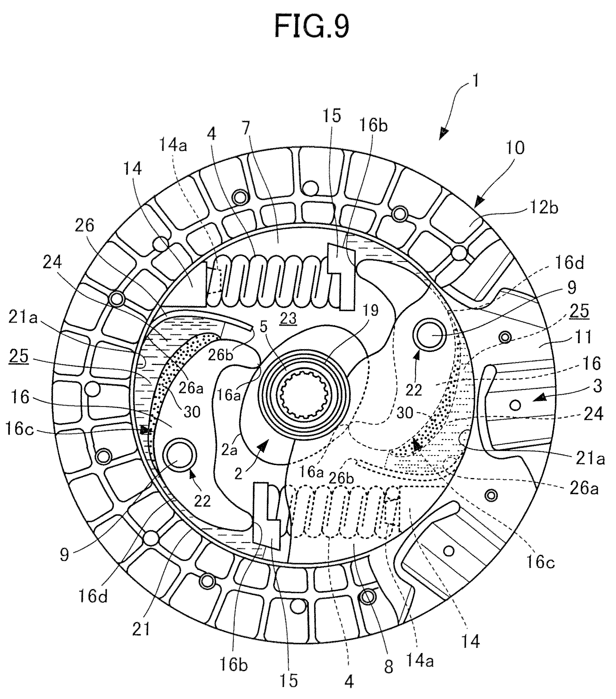

The torsional vibration damping apparatus according to the second embodiment will be explained hereinafter with reference to FIGS. 9 to 10. The constitution parts and elements forming the second embodiment the same as those of the first embodiment bear the same reference numerals as those of the first embodiment, and their explanation will not be made hereinafter.

As shown in FIG 9, the outer peripheral portion 16c of the arm member 16 has a flexible bag member 30 mounted thereon, and the bag member 30 is made of for example rubber and vinyl, and has a liquid of silicon oil and the like sealed therein, and is compressible and deformable.

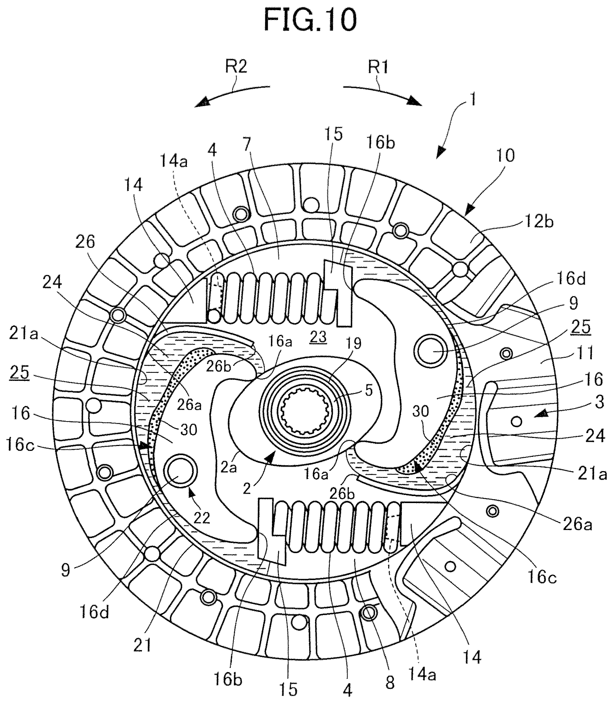

As shown in FIG. 10, the torsional vibration damping apparatus 1 according to the second embodiment can reliably push out the grease 24 accommodated in the space 25 from the space 25 while the bag member 30 is being compressed and deformed when the cam member 2 is rotated to have the arm member 16 pivoted with the one end portion 16a of the arm member 16 being moved from its radially inward position to its radially outward position.

### (Third Embodiment)

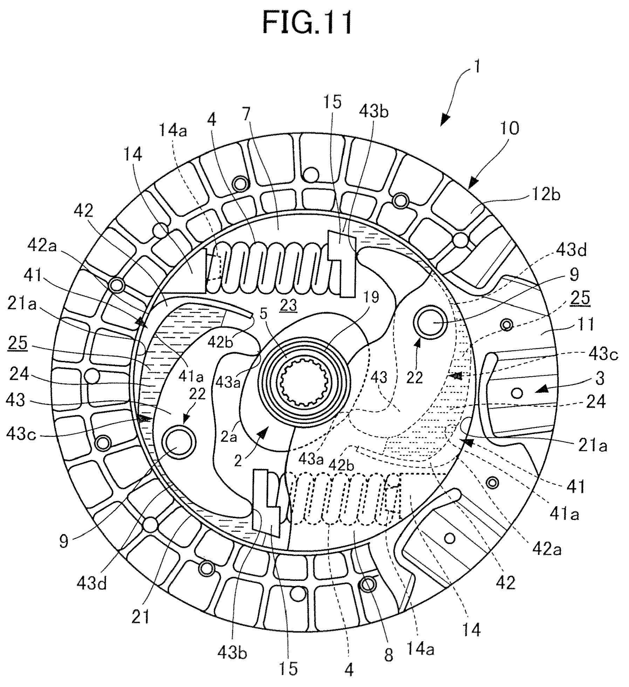

The torsional vibration damping apparatus 1 according to the third embodiment will be explained hereinafter with reference to FIGS. 11 to 12. The constitution parts and elements forming the third embodiment bear the same reference numerals as those of the first embodiment, and their explanation will not be made hereinafter.

As shown in FIG 11, the inner peripheral portion 21a of the annular member 21 has a mound portion 41 provided thereon, and the mound portion 41 is integrally formed with the annular member 21. The mound portion 41 may be formed separately from the inner peripheral portion 21a of the annular member 21 but fastened to the inner peripheral portion 21a of the annular member 21.

The mound portion 41 constitutes part of the annular member 21, and thus has a radially inner peripheral portion (hereinafter simply referred to as "inner peripheral portion") 41a which constitutes part of the inner peripheral portion 21a of the annular member 21.

The arm member 43 has a radially outer peripheral portion (hereinafter simply referred to as "outer peripheral portion") 43c which has a radius of curvature different from the radius of curvature of the arm member 16 and smaller than the radius of curvature of the arm member 16.

The mound portion 41 has an end portion integrally formed with a guide portion 42 serving as a guide member. The guide portion 42 has a base end portion 42a connected with the end portion of the annular member 21, and a forward end portion 42b extending from the base end portion 42a toward the contact portion of the one end portion 16a of the arm member 16 and the cam surface 2a of the cam member 2.

The guide portion 42 has a function to guide the grease 24 accommodated in the space 25 to the contact portion of the one end portion 16a of the arm member 16 and the cam surface 2a of the cam member 2.

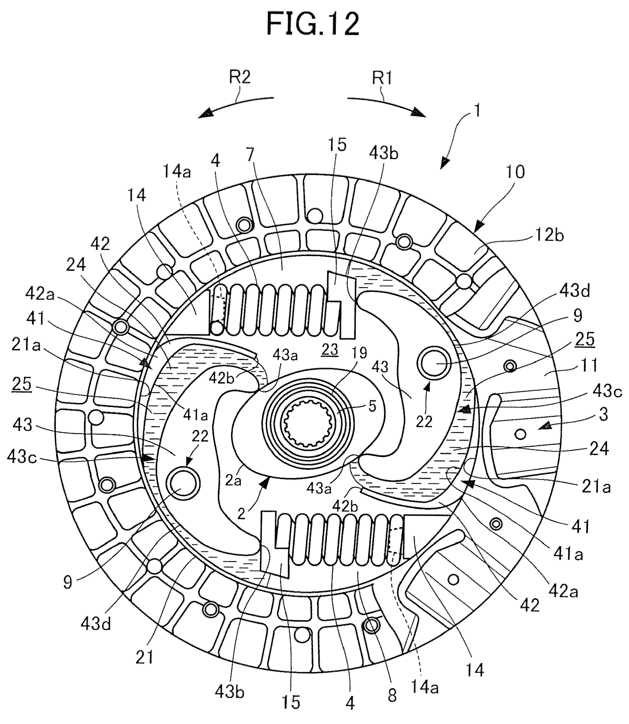

The torsional vibration damping apparatus 1 according to the present embodiment is constructed as shown in FIG 12 to have the radially inner peripheral portion 41a of the mound portion 41 having a curved surface shape set with respect to the shape of the radially outer peripheral portion 43c of the arm member 43 to maintain the positional relationship of the mound portion 41 and the arm member 43 in such a manner that the distance between the radially outer peripheral portion 43c of the arm member 43 and the radially inner peripheral portion 41a of the mound portion 41 is gradually enlarged from the outer peripheral base point portion 43d of the arm member 43 toward the base end portion 42a of the guide portion 42 when the cam member 2 is rotated to have the arm member 43 pivoted with the one end portion 43a of the arm member 43 being moved in a radial direction from its radially inward position to its radially outward position.

Further, the outer peripheral base point portion 43d of the arm member 43 in the present embodiment constitutes the predetermined position near the other end portion 43b of the arm member 43.

In the present embodiment, the radius of curvature of the inner peripheral portion 41a of the mound portion 41 is set with respect to the arm member 43 for the purpose of maintaining the above positional relationship of the mound portion 41 and the arm member 43 by setting the distance between the arm member 43 and the annular member 21 with respect to the shape of the outer peripheral portion 43c of the arm member 43.

Similarly, the torsional vibration damping apparatus 1 according to the present embodiment thus constructed can continuously supply the grease 24 along the guide portion 42 to the contact portion formed by the one end portion 43a of the arm member 43 and the cam surface 2a of the cam member 2 after the grease 24 accommodated in the space 25 is pushed out toward the guide portion 42 from the space 25 by the pivotal motion of the arm member 43 as shown in FIG 12.

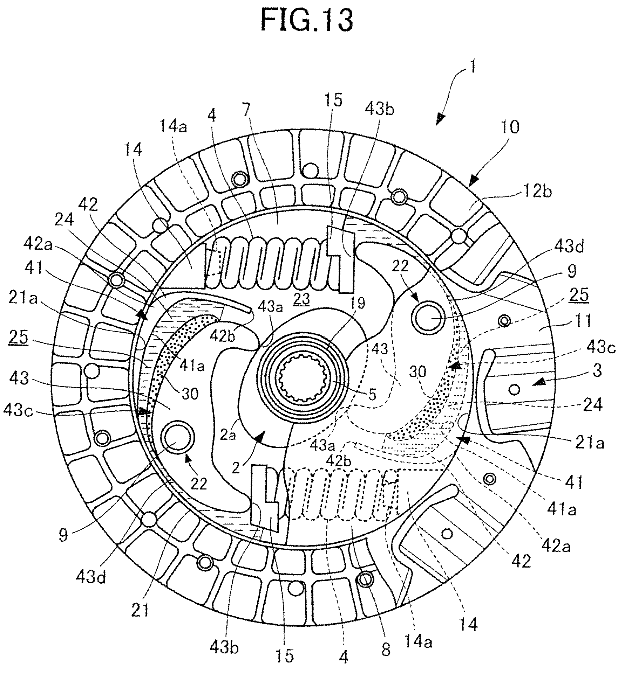

Further, the torsional vibration damping apparatus 1 according to the present embodiment may be constructed as shown in FIG 13 to have a flexible bag member 30 mounted on the outer peripheral portion 43c of the arm member 43. The torsional vibration damping apparatus 1 according to the present embodiment thus constructed with the flexible bag member 30 can reliably push out the grease 24 accommodated in the space 25 from the space 25 while the bag member 30 is being compressed and deformed when the cam member 2 is rotated to have the arm member 43 pivoted with the one end portion 43a of the arm member 43 being moved from its radially inward position to its radially outward position.

Although the torsional vibration damping apparatuses 1 according to the above embodiments have been explained as each intervening between the internal combustion engine of the vehicle and the power transmission train having the transmission, the present invention is not limited to those embodiments, but can be applied to any type of torsional vibration damping apparatuses to be provided in the power transmission train forming part of the vehicle and the like.

The torsional vibration damping apparatus may be applied to a hybrid damper forming part of a hybrid vehicle which is disposed between the output shaft of the internal combustion engine and the power splitting mechanism for splitting the driving forces to the electric motor and the output shaft to the vehicle wheels.

Further, the torsional vibration damping apparatus 1 may be applied to the lockup damper positioned between the lockup clutch apparatus of the torque converter and the transmission gear set.

Further, the torsional vibration damping apparatus 1 may be provided between the differential case and the ring gear mounted on the outer peripheral portion of the differential case.

Although the cam surface 2a of the cam member 2 in each of the above present embodiments is formed in an ellipse shape, the shape of the cam surface 2a of the cam member 2 is not limited to the above ellipse shape if the cam surface 2a is varied in radius of curvature in response to the varied torsion angle of the disc plates 7, 8 and the cam member 2.

From the foregoing description, it will be understood that the torsional vibration damping apparatus according to the present invention has such an advantageous effect that the contact portion of the one end portion of the arm member and the cam surface of the cam member can continuously be supplied with the lubricant agent to enhance the lubrication property of the contact portion of the one end portion of the arm member and the cam surface, thereby making it possible to prevent the abrasion, the burn-in and the like of the contact portion. The torsional vibration damping apparatus according to the present invention is useful as a torsional vibration damping apparatus which is positioned between the internal combustion engine of the vehicle and the power transmission train to have the cam member and the rotation member relatively rotatably connected by the resilient member to transmit the rotation torque between the cam member and the rotation member.

### {Reference Signs List}

1: torsional vibration damping apparatus
2: cam member
2a: cam surface
3: rotation member
4: coil spring (resilient member)
6: input shaft
7, 8: disc plate (rotation member)
9: pivot shaft (pivot fulcrum portion)
14: base seat
16,43: arm member
16a, 43a: one end portion
16b, 43b: other end portion
16c, 43c: outer peripheral portion (radially outer peripheral portion)
21: annular member (retaining member)
21a: inner peripheral portion (radially inner peripheral portion)
23: closed space
24: grease (lubricant agent)
25: space
26: guide plate (guide member)
26a: base end portion
26b: forward end portion
30: bag member
41a: inner peripheral portion (radially inner peripheral portion)
42: guide portion (guide member)
42a: base end portion
42b: forward end portion

## Claims

1. A torsional vibration damping apparatus (1) comprising:
a cam member (2) having an outer peripheral portion formed with a cam surface (2a) having a radius of curvature varied in the circumferential direction thereof,
a rotation member (3) provided in coaxial relationship with the cam member (2) and relatively rotatable with respect to the cam member (2),
a resilient member (4) provided between the cam member (2) and the rotation member (3) and resiliently deformable when the cam member (2) and the rotation member (3) are relatively rotated with each other,
an arm member (16, 43) having one end portion (16a, 43a) held in contact with the cam surface (2a) of the cam member (2), and the other end portion (16b, 43b) resiliently urged by the resilient member (4), the arm member (16, 43) being pivotable around the pivot axis of a pivotal fulcrum portion (9) provided on the rotation member (3) to resiliently deform the resilient member (4) and to transmit rotation torque between the cam member (2) and the rotation member (3) when the cam member (2) and the rotation member (3) are relatively rotated with each other,
an annular retaining member (21) having a radially inner peripheral portion (21a) opposing to the cam surface (2a) of the cam member (2) and fastened to the rotation member (3) to surround the cam member (2) and the arm member (16, 43), the annular retaining member (21) allowing lubricant agent (24) to be adhered to the radially inner peripheral portion (21a) and to accommodate part of the lubricant agent in a space formed between the radially inner peripheral portion (21a) and the radially outer peripheral portion (16c, 43c) of the arm member (16, 43) when the lubricant agent is scattered radially outwardly by the centrifugal force of the cam member (2) and the rotation member (3) rotated together,
**characterized in that** it comprises a guide portion (26, 42) having a base end portion (26a, 42a) attached to the radially inner peripheral portion (21a) of the retaining member (21) in such a manner that the base end portion (26a, 42a) is positioned near the one end portion (16a, 43a) of the arm member (16, 43) with respect to the pivotal fulcrum portion (9), and a forward end portion (26b, 42b) extending from the base end portion (26a, 42a) toward a contact portion formed by the one end portion (16a, 43a) of the arm member (16, 43) and the cam surface (2a) of the cam member (2) to guide the lubricant agent (24) accommodated in the space to the contact portion formed by the one end portion of the arm member and the cam surface of the cam member,
the retaining member (21) and the arm member (16, 43) being constructed to
have the positional relationship with each other in such a manner that the distance between the radially outer peripheral portion (16c, 43c) of the arm member (16, 43) and the radially inner peripheral portion (21a) of the retaining member (21) is gradually enlarged from the outer peripheral base point portion near the pivot axis of the arm member (16, 43) toward the base end portion (26a, 42a) of the guide member (26, 42) in a state where the arm member (16, 43) is pivoted with the one end portion (16a, 43a) of the arm member being moved in a radial direction from the radially inward position of the cam surface (2a) to the radially outward position of the cam surface.

2. The torsional vibration damping apparatus (1) according to claim 1, in which the radially outer peripheral portion (16c) of the arm member (16) has a curved surface shape set with respect to the shape of the radially inner peripheral portion (21a) of the retaining member (21) to maintain the positional relationship of the retaining member (21) and the arm member (16) in such a manner that the distance between the radially outer peripheral portion (16c) of the arm member (16) and the radially inner peripheral portion (21a) of the retaining member (21) is gradually enlarged from the predetermined position at the other end portion (16b) of the arm member (16) toward the base end portion (26a) of the guide member (26) in a state where the arm member is pivoted with the one end portion of the arm member being moved in a radial direction from its radially inward position to its radially outward position.

3. The torsional vibration damping apparatus (1) according to claim 1, in which the radially inner peripheral portion (21a) of the retaining member (21) has a curved surface shape set with respect to the shape of the radially outer peripheral portion (43c) of the arm member (43) to maintain the positional relationship of the retaining member (21) and the arm member (43) in such a manner that the distance between the radially outer peripheral portion (43c) of the arm member (43) and the radially inner peripheral portion (21a) of the retaining member (21) is gradually enlarged from the predetermined position at the other end portion of the arm member toward the base end portion (42a) of the guide member (42) in a state where the arm member (43) is pivoted with the one end portion of the arm member being moved in a radial direction from its radially inward position to its radially outward position.

4. The torsional vibration damping apparatus (1) according to any one of claims 1 to 3, which further comprises a flexible bag member (30) provided on the radially outer peripheral portion (16c, 43c) of the arm member (16, 43).

5. The torsional vibration damping apparatus (1) according to any one of claims 1 to 4 in which the rotation member (3) includes a pair of disc plates (7, 8) arranged at the both axial sides of the cam member (2) and secured to each other in axially spaced relationship with each other at a predetermined space interval, the disc plates (7, 8) rotatably supporting the arm member (16, 43) through a pivot shaft constituting the pivotal fulcrum portion (9), and a support member (14) provided on the disc plates (7, 8) to support the resilient member (4),
the axial width of the arm member (16, 43) being set at a width near the predetermined space interval,
the retaining member (21) is fastened to the pair of disc plates (7, 8) radially outwardly of the arm member (16, 43), the pair of disc plates (7, 8) and the retaining member (21) partly forming together a closed space in which the lubricant agent (24) is accommodated.

6. The torsional vibration damping apparatus (1) according to any one of claims 1 to 5 in which the cam member (2) is drivably connected with the input shaft of a transmission of a power transmission train, and the rotation torque of an internal combustion engine is transmitted to the rotation member (3).

## Patentansprüche

1. Torsionsschwingungsdämpfungsvorrichtung (1), umfassend:
ein Nockenglied (2) mit einem Außenumfangsabschnitt, der mit einer Nockenfläche (2a) ausgebildet ist, die einen Krümmungsradius aufweist, welcher in der Umfangsrichtung davon variiert ist,
ein Drehglied (3), das in koaxialer Beziehung mit dem Nockenglied (2) vorgesehen ist und bezüglich des Nockenglieds (2) relativ drehbar ist,
ein elastisches Glied (4), das zwischen dem Nockenglied (2) und dem Drehglied (3) vorgesehen ist und elastisch verformbar ist, wenn das Nockenglied (2) und das Drehglied (3) in Bezug zueinander gedreht werden,
ein Armglied (16, 43) mit einem Endabschnitt (16a, 43a), der in Kontakt mit der Nockenfläche (2a) des Nockenglieds (2) gehalten ist, wobei der andere Endabschnitt (16b, 43b) elastisch durch das elastische Glied (4) gedrängt wird, wobei das Armglied (16, 43) um die Schwenkachse eines Schwenkhebelpunktabschnitts (9) schwenkbar ist, der am Drehglied (3) vorgesehen ist, um das elastische Glied (4) elastisch zu verformen und ein Drehmoment zwischen dem Nockenglied (2) und dem Drehglied (3) zu übertragen, wenn das Nockenglied (2) und das Drehglied (3) in Bezug zueinander gedreht werden,
ein ringförmiges Halteglied (21) mit einem radial inneren Umfangsabschnitt (21 a), der der Nockenfläche (2a) des Nockenglieds (2) gegenüberliegt und zum Umgeben des Nockenglieds (2) und des Armglieds (16, 43) am Drehglied (3) befestigt ist, wobei das ringförmige Halteglied (21) ermöglicht, dass Schmiermittel (24) am radial inneren Umfangsabschnitt (21 a) anhaftet, und einen Teil des Schmiermittels in einem Raum aufzunehmen, der zwischen dem radial inneren Umfangsabschnitt (21 a) und dem radial äußeren Umfangsabschnitt (16c, 43c) des Armglieds (16, 43) ausgebildet ist, wenn das Schmiermittel durch die Zentrifugalkraft des Nockenglieds (2) und des Drehglieds (3), die zusammengedreht werden, radial nach außen verteilt wird,
**dadurch gekennzeichnet, dass** sie einen Führungsabschnitt (26, 42) umfasst, der einen Basisendabschnitt (26a, 42a), welcher derart am radial inneren Umfangsabschnitt (21 a) des Halteglieds (21) angebracht ist, dass der Basisendabschnitt (26a, 42a) nahe dem einen Endabschnitt (16a, 43a) des Armglieds (16, 43) bezüglich des Schwenkhebelpunktabschnitts (9) angeordnet ist, und einen vorderen Endabschnitt (26b, 42b) aufweist, der vom Basisendabschnitt (26a, 42a) zu einem Kontaktabschnitt hin verläuft, welcher durch den einen Endabschnitt (16a, 43a) des Armglieds (16, 43) und die Nockenfläche (2a) des Nockenglieds (2) ausgebildet ist, um das Schmiermittel (24), das im Raum aufgenommen ist, zum Kontaktabschnitt, der durch den einen Endabschnitt des Armglieds und die Nockenfläche des Nockenglieds ausgebildet ist, zu führen,
wobei das Halteglied (21) und das Armglied (16, 43) derart zum Aufweisen derselben Positionsbeziehung zueinander gebaut sind, dass der Abstand zwischen dem radial äußeren Umfangsabschnitt (16c, 43c) des Armglieds (16, 43) und dem radial inneren Umfangsabschnitt (21 a) des Halteglieds (21) vom Außenumfangsbasispunktabschnitt nahe der Schwenkachse des Armglieds (16, 43) zum Basisendabschnitt (26a, 42a) des Führungsglieds (26, 42) allmählich vergrößert wird, in einem Zustand, in dem das Armglied (16, 43) geschwenkt wird, wobei der eine Endabschnitt (16a, 43a) des Armglieds in einer radialen Richtung von der radial einwärtigen Position der Nockenfläche (2a) zur radial auswärtigen Position der Nockenfläche bewegt wird.

2. Torsionsschwingungsdämpfungsvorrichtung (1) nach Anspruch 1, wobei der radial äußere Umfangsabschnitt (16c) des Armglieds (16) eine gekrümmte Oberflächenform aufweist, die bezüglich der Form des radial inneren Umfangsabschnitts (21 a) des Halteglieds (21) eingerichtet ist, um die Positionsbeziehung des Halteglieds (21) und des Armglieds (16) derart beizubehalten, dass der Abstand zwischen dem radial äußeren Umfangsabschnitt (16c) des Armglieds (16) und dem radial inneren Umfangsabschnitt (21 a) des Halteglieds (21) von der vorgegebenen Position am anderen Endabschnitt (16b) des Armglieds (16) zum Basisendabschnitt (26a) des Führungsglieds (26) allmählich vergrößert wird, in einem Zustand, in dem das Armglied geschwenkt wird, wobei der eine Endabschnitt des Armglieds in einer radialen Richtung von seiner radial einwärtigen Position zu seiner radial auswärtigen Position bewegt wird.

3. Torsionsschwingungsdämpfungsvorrichtung (1) nach Anspruch 1, wobei der radial innere Umfangsabschnitt (21c) des Halteglieds (21) eine gekrümmte Oberflächenform aufweist, die bezüglich der Form des radial äußeren Umfangsabschnitts (43c) des Armglieds (43) eingerichtet ist, um die Positionsbeziehung des Halteglieds (21) und des Armglieds (43) derart beizubehalten, dass der Abstand zwischen dem radial äußeren Umfangsabschnitt (43c) des Armglieds (43) und dem radial inneren Umfangsabschnitt (21 a) des Halteglieds (21) von der vorgegebenen Position am anderen Endabschnitt des Armglieds zum Basisendabschnitt (42a) des Führungsglieds (42) allmählich vergrößert wird, in einem Zustand, in dem das Armglied (43) geschwenkt wird, wobei der eine Endabschnitt des Armglieds in einer radialen Richtung von seiner radial einwärtigen Position zu seiner radial auswärtigen Position bewegt wird.

4. Torsionsschwingungsdämpfungsvorrichtung (1) nach einem der Ansprüche 1 bis 3, ferner umfassend ein flexibles Beutelglied (30), das am radial äußeren Umfangsabschnitt (16c, 43c) des Armglieds (16, 43) vorgesehen ist.

5. Torsionsschwingungsdämpfungsvorrichtung (1) nach einem der Ansprüche 1 bis 4, wobei das Drehglied (3) ein Paar Scheibenplatten (7, 8), die an den beiden axialen Seiten des Nockenglieds (2) angeordnet sind und in axial beabstandeter Beziehung zueinander in einem vorgegebenen Raumintervall aneinander befestigt sind, wobei die Scheibenplatten (7, 8) das Armglied (16, 43) über einen Schwenkschaft, der den Schwenkhebelpunktabschnitt (9) bildet, drehbar stützen, und ein Stützglied (14) enthält, das an den Scheibenplatten (7, 8) zum Stützen des elastischen Glieds (4) vorgesehen ist,
wobei die axiale Breite des Armglieds (16, 43) auf eine Breite nahe dem vorgegebenen Raumintervall eingerichtet ist,
wobei das Halteglied (21) radial auswärts vom Armglied (16, 43) an dem Paar Scheibenplatten (7, 8) befestigt ist, wobei das Paar Scheibenplatten (7, 8) und das Halteglied (21) zusammen einen geschlossenen Raum teilweise ausbilden, in dem das Schmiermittel (24) aufgenommen ist.

6. Torsionsschwingungsdämpfungsvorrichtung (1) nach einem der Ansprüche 1 bis 5, wobei das Nockenglied (2) antreibbar mit der Antriebswelle eines Getriebes eines Lastschaltgetriebestrangs verbunden ist und das Drehmoment eines Verbrennungsmotors auf das Drehglied (3) übertragen wird.

## Revendications

1. Dispositif (1) d'amortissement de vibration de torsion comprenant :
un élément formant came (2) ayant une partie périphérique extérieure conformée avec une surface de came (2a) ayant un rayon de courbure variable dans sa direction circonférentielle ;
un élément rotatif (3) disposé en relation coaxiale avec l'élément formant came (2) et mobile en rotation de manière relative par rapport à l'élément formant came (2) ;
un élément élastique (4) disposé entre l'élément formant came (2) et l'élément rotatif (3) et déformable élastiquement lorsque l'élément formant came (2) et l'élément rotatif (3) tournent de manière relative l'un par rapport à l'autre ;
un élément formant bras (16, 43) ayant une première partie d'extrémité (16a, 43a) maintenue en contact avec la surface de came (2a) de l'élément formant came (2), et l'autre partie d'extrémité (16b, 43b) poussée élastiquement par l'élément élastique (4), l'élément formant bras (16, 43) pouvant pivoter autour de l'axe de pivotement d'une partie formant centre de rotation de pivotement (9) disposée sur l'élément rotatif (3) pour déformer élastiquement l'élément élastique (4) et pour transmettre un couple de rotation entre l'élément formant came (2) et l'élément rotatif (3) lorsque l'élément formant came (2) et l'élément rotatif (3) tournent de manière relative l'un par rapport à l'autre ;
un élément annulaire de maintien (21) ayant une partie périphérique radialement intérieure (21a) en face de la surface de came (2a) de l'élément formant came (2) et fixé à l'élément rotatif (3) pour entourer l'élément formant came (2) et l'élément formant bras (16, 43), l'élément annulaire de maintien (21) permettant qu'un agent lubrifiant (24) adhère à la partie périphérique radialement intérieure (21a) et de loger une partie de l'agent lubrifiant dans un espace formé entre la partie périphérique radialement intérieure (21a) et la partie périphérique radialement extérieure (16c, 43c) de l'élément formant bras (16, 43) lorsque l'agent lubrifiant est diffusé radialement vers l'extérieur par la force centrifuge de l'élément formant came (2) et de l'élément rotatif (3) tournant conjointement,
**caractérisé en ce qu'**il comprend une partie formant guide (26, 42) ayant une partie d'extrémité de base (26a, 42a) attachée à la partie périphérique radialement intérieure (21a) de l'élément de maintien (21) de telle manière que la partie d'extrémité de base (26a, 42a) est placée près de la première partie d'extrémité (16a, 43a) de l'élément formant bras (16, 43) par rapport à la partie formant centre de rotation de pivotement (9), et une partie d'extrémité avant (26b, 42b) s'étendant depuis la partie d'extrémité de base (26a, 42a) en direction d'une partie de contact formée par la première partie d'extrémité (16a, 43a) de l'élément formant bras (16, 43) et la surface de came (2a) de l'élément formant came (2) pour guider l'agent lubrifiant (24) logé dans l'espace vers la partie de contact formée par la première partie d'extrémité de l'élément formant bras et la surface de came de l'élément formant came,
l'élément de maintien (21) et l'élément formant bras (16, 43) étant constitués pour être positionnés l'un par rapport à l'autre de manière telle que la distance entre la partie périphérique radialement extérieure (16c, 43c) de l'élément formant bras (16, 43) et la partie périphérique radialement intérieure (21a) de l'élément de maintien (21) augmente graduellement depuis la partie formant point de base périphérique extérieure près de l'axe de pivot de l'élément formant bras (16, 43) en direction de la partie d'extrémité de base (26a, 42a) de l'élément formant guide (26, 42) dans l'état où l'élément formant bras (16, 43) pivote et la première partie d'extrémité (16a, 43a) de l'élément formant bras est déplacée dans la direction radiale depuis la position radialement vers l'intérieur de la surface de came (2a) jusqu'à la position radialement vers l'extérieur de la surface de came.

2. Dispositif (1) d'amortissement de vibration de torsion selon la revendication 1, dans lequel la partie périphérique radialement extérieure (16c) de l'élément formant bras (16) a une forme de surface incurvée déterminée par rapport à la forme de la partie périphérique radialement intérieure (21a) de l'élément de maintien (21) pour maintenir la position relative de l'élément de maintien (21) et de l'élément formant bras (16) de telle manière que la distance entre la partie périphérique radialement extérieure (16c) de l'élément formant bras (16) et la partie périphérique radialement intérieure (21a) de l'élément de maintien (21) augmente graduellement depuis la position prédéterminée au niveau de l'autre partie d'extrémité (16b) de l'élément formant bras (16) en direction de la partie d'extrémité de base (26a) de l'élément formant guide (26) dans l'état où l'élément formant bras pivote et la première partie d'extrémité de l'élément formant bras est déplacée dans la direction radiale depuis sa position radialement vers l'intérieur jusqu'à sa position radialement vers l'extérieur.

3. Dispositif (1) d'amortissement de vibration de torsion selon la revendication 1, dans lequel la partie périphérique radialement intérieure (21a) de l'élément de maintien (21) a une forme de surface incurvée déterminée par rapport à la forme de la partie périphérique radialement extérieure (43c) de l'élément formant bras (43) pour maintenir la position relative de l'élément de maintien (21) et de l'élément formant bras (43) de telle manière que la distance entre la partie périphérique radialement extérieure (43c) de l'élément formant bras (43) et la partie périphérique radialement intérieure (21a) de l'élément de maintien (21) augmente graduellement depuis la position prédéterminée au niveau de l'autre partie d'extrémité de l'élément formant bras en direction de la partie d'extrémité de base (42a) de l'élément formant guide (42) dans l'état où l'élément formant bras (43) pivote et la première partie d'extrémité de l'élément formant bras est déplacée dans la direction radiale depuis sa position radialement vers l'intérieur jusqu'à sa position radialement vers l'extérieur.

4. Dispositif (1) d'amortissement de vibration de torsion selon l'une quelconque des revendications 1 à 3, qui comprend en outre un élément formant sac souple (30) disposé sur la partie périphérique radialement extérieure (16c, 43c) de l'élément formant bras (16, 43).

5. Dispositif (1) d'amortissement de vibration de torsion selon l'une quelconque des revendications 1 à 4, dans lequel l'élément rotatif (3) inclut une paire de plaques de disques (7, 8) agencées axialement des deux côtés de l'élément formant came (2) et fixées l'une à l'autre dans une relation axialement espacée l'une de l'autre selon un intervalle d'espace prédéterminé, les plaques de disques (7, 8) supportant de façon mobile en rotation l'élément formant bras (16, 43) au moyen d'un pivot constituant la partie formant centre de rotation de pivotement (9), et d'un élément support (14) disposé sur les plaques de disques (7, 8) pour supporter l'élément élastique (4),
la largeur axiale de l'élément formant bras (16, 43) étant fixée à une largeur proche de l'intervalle d'espace prédéterminé,
dans lequel l'élément de maintien (21) est fixé à la paire de plaques de disques (7, 8) radialement vers l'extérieur de l'élément formant bras (16, 43), la paire de plaques de disques (7, 8) et l'élément de maintien (21) formant partiellement ensemble un espace fermé dans lequel l'agent lubrifiant (24) est logé.

6. Dispositif (1) d'amortissement de vibration de torsion selon l'une quelconque des revendications 1 à 5, dans lequel l'élément formant came (2) est accouplé de façon à pouvoir être entraîné à l'arbre d'entrée d'une transmission d'une chaîne cinématique de transmission de force motrice, et dans lequel le couple de rotation d'un moteur à combustion interne est transmis à l'élément rotatif (3).
